(19) Europäisches Patentamt
European Patent Office
Office européen des brevets

(11) Veröffentlichungsnummer: **0 278 275**
**A1**

# (12) EUROPÄISCHE PATENTANMELDUNG

(21) Anmeldenummer: 88100770.2

(22) Anmeldetag: 20.01.88

(51) Int. Cl.4: C08G 65/48

(30) Priorität: 31.01.87 DE 3702919
13.03.87 DE 3708109

(43) Veröffentlichungstag der Anmeldung:
17.08.88 Patentblatt 88/33

(84) Benannte Vertragsstaaten:
DE FR GB IT

(71) Anmelder: BAYER AG
Konzernverwaltung RP Patentabteilung
D-5090 Leverkusen 1 Bayerwerk(DE)

(72) Erfinder: Heitz, Walter, Prof. Dr.
Am Schmidtborn 5
D-3575 Kirchhain(DE)
Erfinder: Schneider, Karl-Heinrich, Dipl.-Chem.
Bahnhofstrasse 32
D-3550 Marburg(DE)

## (54) Polyphenylenoxide mit hohem Molekulargewicht und ein Verfahren zu deren Herstellung und deren Verwendung.

(57) Die Erfindung betrifft Polyphenylenoxide mit hohem Molekulargewicht (PPO) sowie ein Verfahren zu ihrer Herstellung durch Umsetzung von mehrbasigen aromatischen Carbonsäuren oder deren Derivaten mit Polyphenylenoxiden, sowie deren Verwendung zur Modifizierung von Kunststoffen.

EP 0 278 275 A1

## Polyphenylenoxide mit hohem Molekulargewicht und ein Verfahren zu deren Herstellung und deren Verwendung

Die Erfindung betrifft Polyphenylenoxide mit hohem Molekulargewicht (PPO) sowie ein Verfahren zu ihrer Herstellung durch Umsetzung von mehrbasigen aromatischen Carbonsäuren oder deren Derivaten mit Polyphenylenoxiden, sowie deren Verwendung zur Modifizierung von Kunststoffen.

Polyphenylenoxide und deren Herstellung sind bekannt (z.B. US-PS 3 491 058, 3 507 832, 3 455 736).

Weiterhin ist bekannt, spezielle Polyphenylenoxide zu acylgekoppelten Polymeren umzusetzen (z.B. DE-OS 2 822 859, 2 822 856). Die Anwendungsbreite und das Eigenschaftlsbild von solchen Polymeren kann jedoch nicht allen Anforderungen immer ganz gerecht werden.

Es wurde nun gefunden, daß Polyphenylenoxide mit hohem Molekulargewicht aus mehrbasigen aromatischen Carbonsäuren und Polyphenylenoxiden verbesserte Eigenschaften besitzen.

Gegenstand der Erfindung sind Polyphenylenoxide mit hohem Molekulargewicht der Formel (I)

$Ar\text{-}(\text{-}COR)_m$ (I),

in welcher

m für die Zahl 2, 3 oder 4 steht,

Ar für einen gegebenenfalls substituierten aromatischen Rest mit 6 bis 20 C-Atomen steht und

R für eine Polyphenylenoxidkette der Formel (II) steht

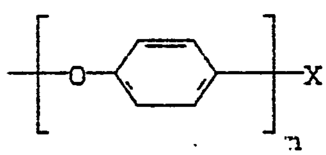

(II),

in welcher

X für Halogen wie Cl oder Br steht und

n für eine ganze Zahl von 10 bis 10 000, vorzugsweise 100 bis 5000 steht.

Die erfindungsgemäßen Polyphenylenoxide haben Molekulargewichte von etwa 2000 bis 3 500 000, vorzugsweise 20 000 bis 1 800 000 und inhärente Viskositäten von 0,3 bis 3,0 dl/g, vorzugsweise 0,3 bis 0,5 gl/g (gemessen in N-Methylpyrrolidon bei 30°C).

In Formel (I) steht vorzugsweise für einen aromatischen Rest mit 6 bis 10 C-Atomen. Besonders bevorzugt ist Ar ein aromatischer Rest mit 6 C-Atomen, ganz besonders bevorzugt der Rest der Formel (Ia)

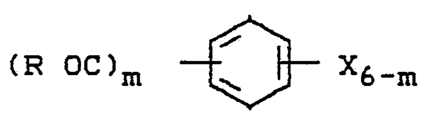

(Ia),

in welcher

m die bei Formel I angegebene Bedeutung hat und

X für Wasserstoff (H) oder einen Substituenten wie Halogen (Cl, Br) oder eine Alkylgruppe mit 1 bis 4 C-Atomen steht und

R die bei Formel (I) angegebene Bedeutung hat.

Ein weiterer Gegenstand der Erfindung ist ein Verfahren zur Herstellung von Polyphenylenoxiden der Formel (I)

$Ar\text{-}(\text{-}COR)_m$ (I),

in welcher

m für die Zahl 2, 3 oder 4 steht,

Ar für einen aromatischen Rest mit 6 bis 20 C-Atomen steht und

R für eine Polyphenylenoxidkette der Formel (II) steht

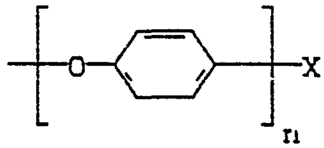

(II),

in welcher
X für Halogen wie Cl oder Br steht und
n für eine ganze Zahl von 10 bis 10 000, vorzugsweise 100 bis 5000 steht,
dadurch gekennzeichnet, daß mehrbasige aromatische Carbonsäuren oder deren Derivate der Formel (III) sowie die Anhydride der entsprechenden Carbonsäuren der Formel (IIIa)

$Ar(COY)_m$ (III),

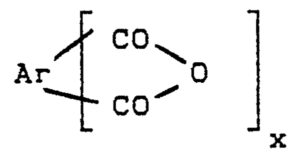

(IIIa),

in welchen
Ar und m die bei Formel (I) angegebene Bedeutung haben,
x für die Zahl 1 oder 2 steht und
Y für Halogen wie Cl, Br, eine OH-Gruppe oder eine $C_6$-$C_{10}$-Aryloxygruppe oder $C_1$-$C_{10}$-Alkoxygruppe steht,
mit Polyphenylenoxiden der Formel (IV)

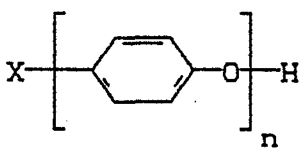

(IV),

in welcher
X und n die bei Formel (II) angegebene Bedeutung haben,
umgesetzt werden.

In Formel (III) steht Y vorzugsweise für Cl, OH und O-Phenyl (Phenolat).

Als Carbonsäuren oder deren Derivate der Formal (III) bzw. deren Anhydride der Formel (IIIa) können eingesetzt werden die freien Säuren, die Säurehalogenide, Ester, Halbester usw., z.B. Terephthalsäure, Terephthalsäuredichlorid, Terephthalsäurediphenylester, 1.3.5-Benzoltricarbonsäure, 1.3.5.-Benzoltricarbonsäuretriphenylester, 1.2.4.5-Benzoltetracarbonsäure, 1.2.3.5-Benzoltetracarbonsäure, Phthalsäure, Phthalsäureanhydrid, Naphthalin-1,2-dicarbonsäure, Anthracen-9,10-dicarbonsäure usw..

Als Polyphenylenoxide der Formel (IV) können bekannte, nach bekannten Methoden hergestellte Polyphenylenoxide verwendet werden (z.B. GB-PS 1 053 053, US-PS 3 491 058).

Die Umsetzung der Carbonsäuren oder deren Derivate der Formel (III) bzw. deren Anhydride der Formel (IIIa) mit den Polyphenylenoxiden der Formel (IV) kann in der Schmelze in Abwesenheit eines Lösungsmittels oder in Gegenwart eines Lösungsmittels durchgeführt werden. In beiden Fällen erfolgt die Umsetzung in Abwesenheit von Sauerstoff bei einer Temperatur von 150 bis 300°C, vorzugsweise 180 bis 220°C, gegebenenfalls bei einem Druck von 1 bis 10 bar in Abwesenheit von Wasser.

Als Lösungsmittel können unter den Bedingungen inerte organische Lösungsmittel verwendet werden, z.B. Ether wie Diphenylether, Hydrochinondimethylether, Diethylenglykoldimethylether (Glyme), Lactame wie N-Methylpyrrolydon, chlorierte Kohlenwasserstoffe wie 1.2.4-Trichlorbenzol, Sulfone wie Diphenylsulfon usw..

Gegebenenfalls können dem Umsetzungsgemisch weitere Zusatzstoffe zugegeben werden, z.B. übliche Umesterungskatalysatoren, Basen wie Alkalicarbonate, Stickstoffheterocyclen usw.. Die Wahl eines Zusatzstoffes sollte sich nach der verwendeten Carbonsäure oder deren Derivat der Formel (III) bzw. dem Anhydrid der Formel (IIIa) richten. So ist es z.B. vorteilhaft bei der Verwendung eines Säurechlorids als Derivat der Formel (III) z.B. eine Base zuzusetzen. Bei der Verwendung eines Esters als Derivat einer Säure

der Formel (III) kann es vorteilhaft sein einen Umesterungskatalysator, z.B. Lewis-Säuren wie Metallsalze (z.B. $SnCl_2$) zuzusetzen.

Bei der Durchführung der Umsetzung der Säuren der Formeln (III) und (IIIa) mit den Polyphenylenoxiden der Formel (IV) können alle Komponenten des Umsetzungsgemisches zusammengegeben werden. Dann wird z.B. durch Durchleiten von Inertgas oder Anlegen von Vakuum und Befluten mit Inertgas der Sauerstoff entfernt. Anschließend wird auf die Umsetzungstemperatur gebracht. Als Inertgas können z.B. $N_2$, Edelgase wie Ar usw. verwendet werden.

Werden Carbonsäurehalogenide als Derivate der Formel (III) eingesetzt, kann es vorteilhaft sein, das Carbonsäurehalogenid in geringen Mengen eines geeigneten Lösungsmittels, z.B. Tetrahydrofuran, zu lösen und zum vorgelegten Polyphenylenther der Formel (IV) zuzugeben.

Die Umsetzung der Carbonsäure oder des Derivats der Formel (III), bzw. des Anhydrids der Formel (IIIa) mit dem Polyphenylenether der Formel (IV) kann durch Eingießen in, oder Zusatz von einem Gemisch aus Alkohol-Ether-konzentrierten wäßriger Säure (z.B. Methanol-Diethylether-konzentrierte wäßrige HCl) abgebrochen oder beendet werden. Die neuen Polyphenylether fallen aus und können z.B. abfiltriert werden. Zur weiteren Reinigung können sie durch übliche Umfällung (z.B. Lösen in N-Methylpyrrolidon, Fällen mit Methanol/konz. HCl) weiter gereinigt werden.

Die erfindungsgemäßen Polyphenylenoxide können mit üblichen Füllstoffen, modifizierenden Mitteln, Pigmenten, Stabilisatoren, flammhemmenden Zusätzen usw. versetzt werden. Sie besitzen aufgrund ihres hohen Molekulargewichts bessere Eigenschaften, z.B. bei der Verarbeitung. Sie können z.B. zu Formteilen, beispielsweise durch Spritzguß und Extrusion verarbeitet werden. Sie können weiterhin mit anderen Kunststoffen abgemischt und verarbeitet werden. Sie eignen sich besonders, wenn hochschmelzende Thermoplaste hergestellt werden sollen. Außerdem können die neuen Polyphenylenether mit anderen Polymeren zu Blockcopolymeren der verschiedensten Typen umgesetzt werden.

Beispiel

Die Herstellung des Polyphenylenethers der Formel (II) kann z.B. nach allgemein bekannten Methoden aus Alkali-4-halogenphenolaten unter $O_2$-und Feuchtigkeits-(Protonen)Ausschluß erfolgen:

15,63 g unter $N_2$ hergestelltes und getrocknetes Kalium-4-bromphenolat werden mit 50 ml abs. Hydrochinondimethylether versetzt und erhitzt. Die Polymerisation beginnt mit der Zugabe einer aus 50 mg CuCl und 3 ml abs. Pyridin hergestellten Katalysatorlösung. Die Reaktionstemperatur liegt bei 100 - 250°C, wobei sich eine Temperatur von 200°C am effektivsten erweist. Die Kondensation wird durch Eingießen der Reaktionslösung in ein Gemisch aus Methanol, Diethylether und konz. HCl abgebrochen. Das aus N-Methylpyrrolidon umgefällte Produkt hat eine inhärente Viskosität von 0,4 dl/g (N-Methylpyrrolidon/30°C).

Herstellung der Polyphenylenether der Formel (I):

a) aus Säurechloriden der Formel (III) und PPO Formel (IV)

0,5 g eines Polyphenylenethers mit einer inhärenten Viskosität von 0,299 dl/g bei 200°C wird in 10 ml Hydrochinondimethylether gelöst und mit 0,2 ml abs. Chinolin versetzt. 15 mg Terephthalsäuredichlorid, gelöst in 75 ml abs. THF, (= trockenem Tetrahydrofuran), werden langsam zugetropft, wobei das THF gleich wieder abdestilliert. Der ausgefällte Polyphenylenether zeigt eine deutlich erhöhte inhärente Viskosität von 0,42 dl/g (in NMP/30°C) sowie eine durch thermogravimetrische Untersuchungen festgestellte bessere thermische Beständigkeit.

b) aus Säureestern der Formel (III) und PPO der Formel (IV)

Unter Intergas werden 1 g eines Polyphenylenethers mit einer inhärten Viskosität von 0,299 dl/g und 17 mg Terephthalsäurediphenylester bei 200°C in 20 ml trockenem Hydrochinondimethylether gelöst. 0,14 mg mit Jod aktiviertes Magnesium werden zugesetzt. Die Reaktionstemperatur wird 8 h bei 200°C gehalten. Der in ein Methanol-Diethylether-Gemisch ausgefällte, gewaschene und getrocknete Polyphenylenether zeigt eine inhärente Viskosität von 0,351 dl/g (in NMP/30°C).

## Ansprüche

1) Polyphenylenoxide mit hohem Molekulargewicht der Formel (I)

$Ar\text{-}(\text{-}COR)_m$ (I),

in welcher
m für die Zahl 2, 3 oder 4 steht,
Ar für einen aromatischen Rest mit 6 bis 20 C-Atomen steht,
R für eine Polyphenylenoxidkette der Formel (II) steht

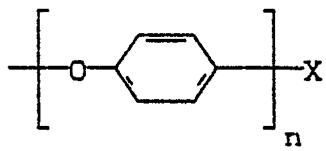 (II),

in welcher
X für Halogen wie Cl oder Br steht und
n für eine ganze Zahl von 10 bis 10 000, vorzugsweise 100 bis 5000 steht.

2) Verfahren zur Herstellung von Polyphenylenoxiden der Formel (I)

$Ar\text{-}(\text{-}COR)_m$ (I),

in welcher
m für die Zahl 2, 3 oder 4 steht,
Ar für einen gegebenenfalls substituierten aromatischen Rest mit 6 bis 20 C-Atomen steht,
R für eine Polyphenylenoxidkette der Formel (II) steht

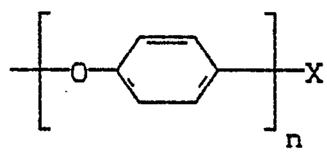 (II),

in welcher
X für Halogen wie Cl oder Br steht und
n für eine ganze Zahl von 10 bis 10 000, vorzugsweise 100 bis 5000 steht,
dadurch gekennzeichnet, daß mehrbasige aromatische Carbonsäuren oder deren Derivate der Formel (III) sowie die Anhydride der entsprechenden Carbonsäuren der Formel (IIIa)

$Ar(COY)_m$ (III), 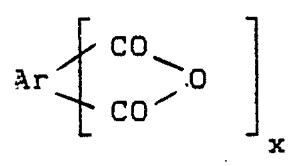 (IIIa),

in welchen
Ar und m die bei Formel (I) angegebene Bedeutung haben,
x für die Zahl 1 oder 2 steht und
Y für Halogen wie Cl, Br, eine OH-Gruppe oder eine $C_6$-$C_{10}$-Aryloxygruppe oder $C_1$-$C_{10}$-Alkoxygruppe steht,
mit Polyphenylenoxiden der Formel (IV)

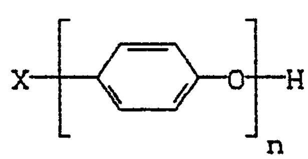 (IV),

in welcher
X und n die bei Formel (II) angegebene Bedeutung haben,
umgesetzt werden.

3. Verwendung der Polyphenylenoxide nach Anspruch 1 zur Modifizierung von Kunststoffen.

Europäisches Patentamt

# EUROPÄISCHER RECHERCHENBERICHT

Nummer der Anmeldung

EP 88 10 0770

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | US-A-3 382 212 (C.C. PRICE et al.)<br>* Ansprüche; Spalte 2, Zeilen 58-62; Spalte 6, Zeilen 49-75 *<br>--- | 1-3 | C 08 G 65/48 |
| D,A | US-A-3 491 058 (C.W. TAYLOR)<br>* Ansprüche *<br>----- | 1 | |
| | | | RECHERCHIERTE SACHGEBIETE (Int. Cl.4) |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 14-06-1988 | DERAEDT G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)